# EUROPÄISCHE PATENTSCHRIFT

(11) **EP 2 726 315 B1**
(45) Veröffentlichungstag und Bekanntmachung des Hinweises auf die Patenterteilung: **02.03.2016**
(21) Anmeldenummer: 12728034.5
(22) Anmeldetag: 11.06.2012
(51) Int. Cl.: H04N 7/18, B60K 35/00, B62D 15/02, B60R 1/00

(54) **VERFAHREN UND VORRICHTUNG ZUM EINPARKEN EINES FAHRZEUGS**
METHOD AND DEVICE FOR PARKING A VEHICLE
DISPOSITIF ET PROCÉDÉ POUR STATIONNER UN VÉHICULE

(30) Priorität: 28.06.2011 DE 102011105884
(43) Veröffentlichungstag der Anmeldung: 07.05.2014
(60) Teilanmeldung: 14179870.2
(73) Patentinhaber: Volkswagen Aktiengesellschaft, 38436 Wolfsburg (DE)
(72) Erfinder: LAMBERT, Georg, 38442 Wolfsburg (DE); ECKERT, Gerald, 31275 Lehrte (DE)
(86) Internationale Anmeldenummer: PCT/EP2012/002470
(87) Internationale Veröffentlichungsnummer: WO 2013/000538

(56) Entgegenhaltungen:
- EP-A1- 1 502 815
- EP-A1- 1 642 768
- EP-A1- 1 927 962
- EP-A1- 2 246 231
- EP-A2- 1 231 110
- EP-A2- 1 288 072
- EP-A2- 2 253 529
- WO-A1-2006/122870
- JP-A- 2010 028 432
- US-A1- 2006 022 810
- US-A1- 2010 265 048

## Beschreibung

Die Erfindung betrifft ein Verfahren und eine Vorrichtung zum Einparken eines mit einem Rückfahrkamerasystem versehenen Kraftfahrzeugs gemäß dem Oberbegriff des Anspruchs 1 sowie des Anspruchs 9.

Zur Erhöhung der Sicherheit im Straßenverkehr und des Fahrkomforts werden verstärkt Fahrerassistenzsysteme eingesetzt, die den Fahrer bei seinen Aufgaben unterstützten und/oder bestimmte Fahrfunktionen teilweise oder vollständig übernehmen. Bekannteste Beispiele dafür sind das ABS (Antiblockiersystem) und ESP (Elektronisches Stabilitätsprogramm). Ferner sind Systeme bekannt, die den Fahrer beim Ein- oder Ausparken eines Kraftfahrzeugs in und aus einer Parklücke unterstützen, wobei im einfachsten Fall eine Abstandsmessung zu Hindernissen basierend auf Ultraschall erfolgt und eine Abstandswarnung dem Fahrer den Abstand zu Hindernissen beispielsweise akustisch signalisiert.

In der nächsten Ausbaustufe wird dem Fahrer anstelle oder zusätzlich zur akustischen Ausgabe eine graphische Darstellung des durch eine geeignete Umfeldsensorik aufgenommenen Umfelds eines Kraftfahrzeugs angeboten. Die graphische Darstellung des Kraftfahrzeugumfeldes erleichtert dem Fahrer ein Ein- oder Ausparkmanöver.

Zum Einsatz gelangen hier insbesondere für ein rückwärtiges Einparkmanöver Rückfahrkameras, die bei einer Rückwärtsfahrt eines Kraftfahrzeugs das rückwärtige Umfeld des Fahrzeugs überwachen und ein Bild des Umfeldes einem Fahrerdisplay zuführen, so dass der Fahrer ein reales Abbild des rückwärtigen Umfeldes seines Kraftfahrzeugs in Echtzeit zur Verfügung hat.

So ist das Fahrzeug Lexus 460 des Jahrgangs 2007 mit einem Parkleitsystem (Advanced Parking Guidance System) ausgerüstet, welches den Fahrer bei einem Einparkvorgang unterstützt, indem ein Bild des Rückraums des Fahrzeugs als Referenz für den rückwärtigen Einparkvorgang in eine Längsparklücke auf einem Display dargestellt wird, wobei eine Steuerung der Lenkung durchgeführt wird, wenn in einer auf dem Display festgelegten Ziel position eingeparkt werden soll. Dabei übernimmt das System nur die Steuerung des Lenkwinkels, die Kontrolle über die Rückwärtsfahrt und deren Geschwindigkeit obliegt weiterhin dem Fahrer.

Um den durch das Parkleitsystem unterstützten Einparkvorgang einzuleiten, muss der Fahrer das Kraftfahrzeug in eine zum Einparken in eine Längsparklücke geeignete Ausgangsposition manövrieren, wobei das System zum Auffinden der günstigen Position keine Hilfestellung anbietet. Nach dem Einlegen des Rückwärtsgangs und dem Berühren einer Aktivierungstaste auf dem Display wird das Parkleitsystem initialisiert und ein Parkrahmen in der möglichen Parklücke angezeigt, wobei der Fahrer mittels auf dem Display dargestellter Bewegungspfeile den Parkrahmen in der Parklücke ausrichten kann. Erscheint der Parkrahmen in der Farbe "Grün", so kann das Parkleitsystem den Parkrahmen erreichen, d.h. der Parkrahmen ist zulässig. Erscheint der eingeblendete Parkrahmen in der Farbe "Rot", so kann der Parkrahmen aus der gewählten Ausgangsposition nicht erreicht werden und der Fahrer muss eine andere Ausgangsposition anfahren. Um den Einparkvorgang in den grünen Parkrahmen einzuleiten, muss der Fahrer den gewählten Parkrahmen bestätigen und dazu eine weitere Taste auf dem Bildschirm betätigen. Anschließend steuert das Parkleitsystem das Fahrzeug in die Parklücke, wobei der Fahrer die Geschwindigkeit regelt. Sollte die Geschwindigkeit zu hoch sein, gibt das System eine Warnung aus. Falls der Fahrer dann die Geschwindigkeit nicht verringert, wird die Assistenz beendet.

Das bekannte Parkleitsystem ist auch in der Lage in Querparklücken einzuparken. Allerdings wird auch in diesem Fall die Wahl der Ausgangsposition nicht direkt unterstützt, sondern erst wenn der Fahrer den Parkrahmen in die mögliche Parklücke zu platzieren versucht, erkennt das System, ob die Querparklücke zulässig ist.

Nachteilig ist, dass das bekannte Parkleitsystem nur in geringem Umfang intuitiv ist, wobei dies insbesondere für die Wahl der Ausgangsposition gilt. Eine zu hohe Komplexität führt zu Systemanzeigen, die dem gewünschten Fahrmanöver nicht entsprechen, wodurch der Fahrer verwirrt wird. Die vom Fahrer erwünschten Fahraktionen sind unklar und die Hilfsgrafiken wechseln überraschend. Es kann vorkommen, dass der Systemzustand dem Fahrerwunsch nicht entspricht, was insbesondere dann passiert, wenn der Fahrer nicht der Ideallinie folgt, sondern mehrfach hin und her manövriert.

Die Druckschrift EP 2 246 231 A1 beschreibt einen Parkassistenten zum Unterstützen des Fahrers beim rückwärtigen Einparken in eine seitliche Parklücke zwischen zwei Hindernissen, beispielsweise anderen parkenden Fahrzeugen. Dabei wird die Umgebung der Parklücke mit einer Rückfahrkamera aufgenommen und auf einem Display dargestellt. Dabei wird dem im Display dargestellten Abbild der Umgebung Hilfslinien überlagert, die sich mit dem einparkenden Fahrzeug mitbewegen und dem Fahrer eine Referenz der korrekten longitudinalen und transversalen Position des Fahrzeugs geben. Insbesondere können die Linien eine ideale Parklücke symbolisieren und so auf dem Display für den Fahrer anzeigen.

Die Druckschrift DE 10 2004 047 481 A1, die als nächstliegender Stand der Technik betrachtet wird, beschreibt ein Verfahren zum Unterstützen eines rückwärtigen Einparkvorgangs eines mit einem Rückfahrkamerasystem ausgestatteten Kraftfahrzeugs in eine Längsparklücke, wobei das Bild des rückwärtigen Umfeldes des Kraftfahrzeugs auf einer Anzeigeeinrichtung des Kraftfahrzeugs dargestellt wird. Zur Ermittlung der Einparkposition werden beiderseits des Fahrzeugs zwei erste Symbole eingeblendet.

Die Druckschrift EP 1 927 962 A1 offenbart ein Verfahren zum Unterstützen eines rückwärtigen Einparkvorgangs eines mit einem Rückfahrkamerasystem ausgestatteten Kraftfahrzeugs in eine Längsparklücke, wobei das Bild des rückwärtigen Umfelds des Kraftfahrzeugs auf eine Anzeigeeinrichtung des Kraftfahrzeugs dargestellt wird, und wobei zur Ermittlung der Einparkposition auf einer Fahrzeugseite zwei erste 3-D-Symbole eingeblendet werden, deren Abstand einer Mindestparklücke für das Kraftfahrzeug entspricht.

Der Erfindung liegt daher die Aufgabe zugrunde, ein Verfahren und eine Vorrichtung zum Einparken eines Kraftfahrzeugs in eine Parklücke zu schaffen, das den Fahrer des Kraftfahrzeugs in einfacher und übersichtlicher Weise beim Einparken in eine Parklücke unterstützt.

Diese Aufgabe wird durch ein Verfahren mit den Merkmalen des Anspruchs 1 sowie durch eine Vorrichtung mit den Merkmalen des Anspruchs 9 gelöst. Bevorzugte Ausführungsformen der Erfindung sind Gegenstand der Unteransprüche.

Bei dem erfindungsgemäßen Verfahren zum Unterstützen eines rückwärtigen Einparkvorgangs eines mit einem Rückfahrkamerasystem ausgestatteten Kraftfahrzeugs in eine Längsparklücke, wobei das Bild des rückwärtigen Umfeldes des Kraftfahrzeugs auf einem Display des Kraftfahrzeugs dargestellt wird, werden zur Ermittlung der Einparkposition beiderseits des Fahrzeugs jeweils zwei erste 3D-Symbole, insbesondere 3D-Quader, in das Bild des Rückfahrkamerasystems eingeblendet, wobei der Abstand zwischen zwei 3D-Symbole einer Seite einer Mindestparklücke für das Kraftfahrzeug entspricht. Dabei umfasst ein Rückfahrkamerasystem mindestens eine Rückfahrkamera, die üblicherweise mit einem Weitwinkelobjektiv versehen ist, um ein maximales rückwärtiges Umfeld abbilden zu können. Zur Darstellung auf der Anzeige, d.h. einem Display, wird das ursprüngliche Bild gegebenenfalls entzerrt. Ferner wird unter der Mindestparklücke eine solche Parklücke verstanden, die zum einzügigen rückwärtigen Einparken des einzuparkenden Kraftfahrzeugs ausreichend groß ist. Folglich ist die Mindestparklücke insbesondere eine Funktion der Größe, d.h. der Länge und der Breite, des einzuparkenden Kraftfahrzeugs, wobei geeignete Sicherheitsabstände vorne und hinten zu berücksichtigen sind.

Dabei wird nach dem Ermitteln der Ausgangsposition im Stand des Kraftfahrzeugs ein im rückwärtigen Bild eingeblendeter Parkrahmen mittels Ausrichten des Einlenkwinkels verschoben, bis der Parkrahmen in der Längsparklücke ausgerichtet ist, wodurch im ausgerichteten Parkrahmen ein Umlenkpunkt definiert wird. Dies erfolgt mittels einer Betätigung des Lenkrades. Befindet sich das Kraftfahrzeug in der Ausgangsposition, so wird ein Parkrahmen in einer ersten Farbe, beispielsweise rot, in das aktuelle rückwärtige Bild eingeblendet. Ein Drehen am Lenkrad bewirkt eine Änderung des möglichen Einlenkwinkels und führt zu einer Verschiebung des Parkrahmens in Richtung der realen, im Bild erkennbaren Parklücke. Ist durch das Betätigen des Lenkrades ein Lenkwinkel eingestellt, mit welchem in die Parklücke eingeparkt werden kann, so wird der Parkrahmen in der Parklücke angeordnet und der Parkrahmen wird nun in einer zweiten Farbe, beispielsweise grün, dargestellt. Der Farbwechsel zeigt zugleich dem Fahrer an, dass ausgehend von der Ausgangsposition das Fahrzeug unter dem ermittelten Lenkwinkel in die Parklücke eingeparkt werden kann, d.h. es wird durch den Parkrahmen innerhalb der Parklücke eine Endposition für eine erste rückwärtige Fahrbewegung definiert, den so genannten Umlenkpunkt, wodurch eine Schätzung des Fahrweges möglich ist. Damit wird durch den gewählten Lenkwinkel, der auch als Soll-Lenkwinkel bezeichnet wird, ein Sollfahrweg festgelegt. Der Sollfahrweg wird vorzugsweise als Hilfslinie im rückwärtigen Bild dargestellt, beispielsweise als rote Linie.

Vorzugsweise werden durch Wahl einer Seite für den Einparkvorgang die ersten 3D-Symbole der anderen Fahrzeugseite ausgeblendet. Mit anderen Worten, betätigt der Fahrer des Kraftfahrzeugs beispielsweise den Blinker, um zu signalisieren auf welcher Fahrbahnseite der Einparkvorgang ausgeführt werden soll, so bewirkt dies ein Ausblenden der 3D-Signale auf der anderen Fahrbahnseite. Anstelle des Blinkers könnte auch eine entsprechende Richtungstaste auf der in diesem Fall berührungsempfindlichen Anzeige vorgesehen werden.

Weiter bevorzugt wird das Kraftfahrzeug zur Ermittlung der Ausgangsposition solange versetzt bis die Lücke zwischen den ersten 3D-Symbolen der Längsparklücke entspricht. Wird daher beispielsweise die reale Parklücke durch zwei parkende Fahrzeuge definiert und die ersten 3D-Symbole durch schematische 3D-Würfel gebildet, so wird das Kraftfahrzeug solange zurückgesetzt, bis der bezüglich des einparkenden Kraftfahrzeugs vordere 3D-Würfel mit dem Heck des vorderen parkenden Fahrzeugs im wesentlichen abschließt. Dieser Zustand definiert die gesuchte Ausgangsposition zum Einparken des Kraftfahrzeugs.

Vorzugsweise wird nach dem Ausrichten des Parkrahmens in der Längsparklücke eine rückwärtige Fahrt mit dem ausgewählten Einlenkwinkel, d.h. dem Soll-Lenkwinkel, von der Ausgangsposition aus zu dem im Parkrahmen angeordneten Umlenkpunkt hin durchgeführt, wobei der tatsächliche Fahrschlauch mittels zweier eingeblendeter zweiter 3D-Symbole, insbesondere 3D-Leitplanken, im rückwärtigen Bild dargestellt wird. Ändert der Fahrer den Soll-Lenkwinkel nicht, d.h. der Soll-Lenkwinkel ist in Übereinstimmung mit dem Ist-Lenkwinkel, so ist der Sollfahrweg in Deckung mit dem tatsächlichen Fahrschlauch, der durch die zweiten 3D-Symbole dargestellt wird. Dies kann beispielsweise auf die folgende Art visualisiert werden. Der Sollfahrweg des betrachteten Bewegungsabschnitts sei beispielsweise in dem rückwärtigen Bild durch eine rote Hilfslinie dargestellt. Diese wird immer dann sichtbar, wenn der Ist-Lenkwinkel, dargestellt durch den Fahrschlauch mittel der zweiten 3D-Symbole, von dem Soll-Lenkwinkel abweicht. Stimmen jedoch der Sollfahrweg und der Istfahrweg überein, so wird die eingeblendete Hilfslinie durch die zweiten 3D-Symbole, d.h. die 3D-Leitplanken, überdeckt und ist nicht mehr sichtbar. Dabei zeigt der Fahrschlauch grundsätzlich den Weg des Fahrzeugs in Abhängigkeit vom aktuellen Lenkwinkel. Somit ändert sich die Darstellung des Fahrschlauchs entsprechend dem Lenkradeinschlag unmittelbar.

Weiter bevorzugt wird der Fahrer des Fahrzeugs innerhalb einer vorgegebenen Umgebung des Umlenkpunktes oder im Umlenkpunkt zum Anhalten aufgefordert und im rückwärtigen Bild wird eine Hilfslinie eingeblendet, die der Fahrer durch Weiterfahrt in Übereinstimmung mit einer Begrenzungslinie der Längsparklücke bringen soll. Mit anderen Worten, kurz vor oder im geschätzten Umlenkpunkt wird der Fahrer beispielsweise durch ein akustisches Signal und/oder ein auf der Anzeigeeinrichtung dargestelltes Stoppzeichen zum Anhalten des Fahrzeugs und zur Ausrichtung einer Hilfslinie aufgefordert. Ist eine Überdeckung erreicht, so stoppt der Fahrer das Fahrzeug, wodurch der Umlenkpunkt erreicht ist und der Endpunkt des nächsten Fahrabschnitts festgelegt ist.

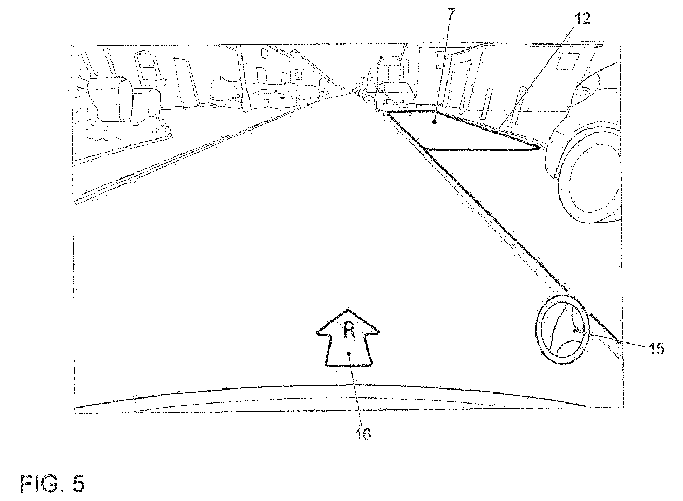

Um den Endpunkt der nun folgenden Fahrzeugbewegung zu erreichen, ist durch Wahl eines neuen Soll-Lenkwinkels der durch die eingeblendeten zweiten 3D-Symbole dargestellte Fahrschlauch mit einer den Sollfahrweg des nächsten Fahrabschnitts definierenden Hilfslinie in Übereinstimmung zu bringen. Durch das in Zusammenhang mit Fig. 5 beschriebene Anordnen des Parkrahmens innerhalb der Parklücke kann das System aufgehend von der Einparkposition den Umlenkpunkt schätzten. Durch das Ausrichten der Hilfslinie an einer Längsparklückenbegrenzung wird die Endposition des zweiten Fahrabschnitts definiert und der endgültige Umlenkpunkt festgelegt. Durch das Stoppen des Fahrzeugs ist der Umlenkpunkt erreicht und es wird der geschätzte Sollfahrweg für den zweiten Fahrabschnitt zwischen Umlenkpunkt und Endposition eingeblendet, so dass der Fahrer den neuen Soll-Lenkwinkel ermitteln kann, indem die Hilfslinie des Sollfahrwegs mit den 3D-Leitplanken in Überdeckung gebracht wird.

Vorzugsweise können zur Unterstützung des Fahrers weitere Hilfslinien in das rückwärtige Bild eingeblendet werden. Diese weiteren Hilfslinien können beispielsweise eingeblendete Abstandsraster sein, mittels denen dem Fahrer die Stellung des Kraftfahrzeugs bezüglich eines die Parklücke nach hinten begrenzenden parkenden Fahrzeugs sowie die Ausrichtung des Kraftfahrzeugs in der Parklücke signalisiert wird.

Eine erfindungsgemäße Vorrichtung zur Durchführung des Verfahrens zum Einparken eines Kraftfahrzeugs in eine Längsparklücke, die ein Rückfahrkamerasystem und eine Anzeige zur Darstellung des von dem Rückfahrkamerasystem aufgenommenen Bildes des rückwärtigen Umfelds des Kraftfahrzeugs umfasst, weist ferner eine Einrichtung zur Erzeugung und Einblendung von ersten 3D-Symbolen in das auf der Anzeige dargestellte rückwärtige Bild der Kraftfahrzeugumgebung zur Ermittlung der Einparkposition auf, wobei auf jeder Fahrzeugseite zwei 3D-Symbole dargestellt sind, deren Abstand der Mindestparklücke für das Kraftfahrzeug entspricht. Als erste 3D-Symbole kommen insbesondere 3D-Quader in Betracht, die beispielsweise als Umrisse mit transparenten Seitenflächen in einer vorgegebenen Farbe in das Bild der rückwärtigen Umgebung, d.h. der Längsparklückensituation, eingeblendet werden. Jede Fahrzeugseite bedeutet in diesem Fall auf der seitlich des Kraftfahrzeugs befindlichen Fahrstreifen oder Parkstreifen.

Vorzugsweise weist die erfindungsgemäße Vorrichtung zum Einparken in Längsparklücken eine Einrichtung zur Erzeugung und Einblendung eines Parkrahmens in das rückwärtige Umfeldbild auf, wobei in der aufgefundenen Einparkposition des Kraftfahrzeugs der Parkrahmen als Funktion des Lenkwinkels in die aufgefundene Längsparklücke verschoben wird, wodurch im verschobenen Parkrahmen ein vorläufiger Umlenkpunkt definiert wird

Weiter bevorzugt weist die Vorrichtung zum Einparken in Längsparklücken eine Einrichtung zur Erzeugung und Einblendung zweiter 3D-Symbole in das Bild des rückwärtigen Kraftfahrzeugsumfeldes auf, wobei die zweiten 3D-Symbole den Fahrschlauch des Kraftfahrzeugs während des Einparkvorgangs darstellen bzw. symbolisieren.

Insbesondere kann die Vorrichtung zum Einparken in Längsparklücken eine Einrichtung zur Erzeugung und Einblendung weiterer Hilfslinien zur Unterstützung des Fahrers während des Einparkvorgangs in das Bild des rückwärtigen Kraftfahrzeugsumfeldes aufweisen.

Weiter bevorzugt weist die Vorrichtung eine Schätzeinheit zur Schätzung des voraussichtlich zurückzulegenden Fahrweges auf. Mittels dieser Schätzeinheit kann der voraussichtliche Fahrweg des Kraftfahrzeugs während der Etappen des Einparkvorgangs geschätzt werden, also beispielsweise der Fahrweg zwischen der Einparkposition und der Umlenkposition sowie der Fahrweg zwischen der Umlenkposition und der Endposition.

Weiter bevorzugt wird zusätzlich zu den 3D-Symbolen ein Abstandsraster in das rückwärtige Bild des Umfeldes des Kraftfahrzeugs, d.h. die rückwärtige Querparklückensituation, eingeblendet, was den Fahrer beim Ausrichten des Kraftfahrzeugs unterstützt.

Bevorzugte Ausführungsformen werden im Folgenden anhand der Zeichnungen erläutert. Dabei zeigt
- Fig.1: das rückwärtige Anfahren einer Einparkposition aus der Sicht der Rückfahrkamera,
- Fig.2: das Kraftfahrzeug auf der Einparkposition,
- Fig. 3: das Kraftfahrzeug auf der Einparkposition mit gewählter Einparkseite
- Fig.4: einen Zwischenzustand bei der Bestimmung des Einparkwinkels,
- Fig.5: den Parkrahmen in der Parklücke mit Umlenkpunkt,
- Fig.6: einen Zwischenzustand beim Einfahren in die Parklücke,
- Fig.7: das Erreichen des Umlenkpunktes in der Parklücke und Ausrichten der Hilfslinie,
- Fig.8: Aufforderung zum Umlenken im Umlenkpunkt,
- Fig.9: Beginn der Rückwärtsfahrt zum Endpunkt,
- Fig.10: einen Zwischenzustand bei der weiteren Rückwärtsfahrt,
- Fig.11: Erreichen der Endposition mit Stoppaufforderung,
- Fig.12: Ausrichten des Fahrzeugs über den Bildinhalt.

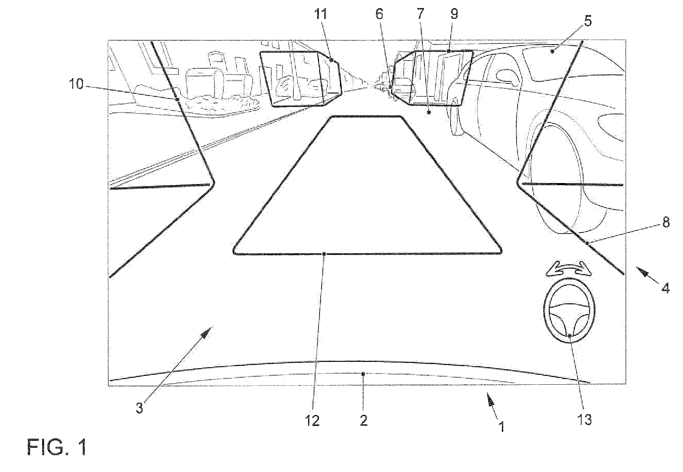

Die Fig. 1 zeigt eine typische Situation für ein rückwärtiges Einparken in eine Längsparklücke. Auf einem Display 1 ist das Bild einer Rückfahrkamera (nicht dargestellt) zu sehen, wobei das rückwärtige Ende 2 des einzuparkenden Fahrzeugs im Display 1 dargestellt ist, um dem Fahrer ein Gefühl für die tatsächlichen Begebenheiten zu vermitteln. Im rückwärtige Bild in Echtzeit ist die Fahrbahn 3 zu erkennen, wobei sich auf der Fahrerseite ein Parkstreifen 4 befindet, auf dem ein erstes Fahrzeug 5 sowie ein zweites Fahrzeug 6 befindet. Zwischen dem ersten und dem zweiten Fahrzeug 5, 6 ist eine Längsparklücke 7 erkennbar. In das rückwärtige Bild sind beiderseits des einzuparkenden Fahrzeugs Quader 8, 9, 10 und 11 als erste 3D-Symbole eingeblendet, wobei der Abstand zwischen den Quadern einer Fahrzeugseite, also der Abstand zwischen den Quadern 8 und 9 sowie zwischen den Quadern 10 und 11, der notwendigen Mindestlänge einer Längsparklücke für das einzuparkende Fahrzeug entspricht. Ferner ist im rückwärtigen Bild ein Parkrahmen 12 eingeblendet, der der Mindestlängsparklücke für das einzuparkende Kraftfahrzeug darstellt. Die in das rückwärtige Bild eingeblendeten Objekte, nämlich die Quader 8, 9, 10 und 11 sowie der Einparkrahmen 12, sind im Koordinatensystem des einzuparkenden Fahrzeugs raumfest angeordnet. Ferner sind die eingeblendeten Objekte 8, 9, 10, 11, 12 transparent, um die realen Objekte nicht zu verdecken, und geeignet farblich ausgelegt, beispielsweise kann der Einparkrahmen in rot gehalten sein, während die Quader 8, 9, 19, 11 in gelber Farbe ausgelegt sind. Insbesondere sind nur die Kanten der Quader 8, 9, 10, 11 sowie der Umfang des Parkrahmens 12 als durchgezogene Linien ausgelegt, während die Quaderflächen in farbiger Transparenz dargestellt sind. Ferner ist zur Information des Fahrers im rechten unteren Bereich des Displays 1 ein erstes Lenksymbol13 bestehend aus einem schematischen Lenkradkranz mit einem beidseitigen Pfeilsymbol eingeblendet. Das beidseitige Pfeilsymbol des ersten Lenksymbols 13 soll dem Fahrer verdeutlichen, dass er das Lenkrad in beide Richtungen bewegen kann, um ein geeignete Einparkposition zu erreichen.

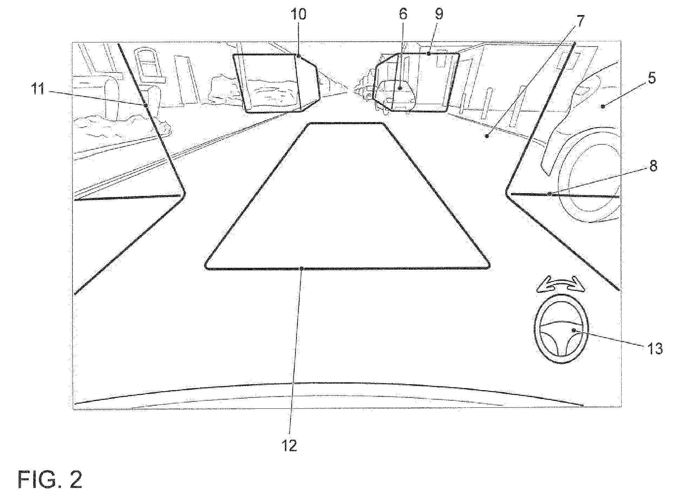

Fig. 2 zeigt das im Display 1 rückwärtige Bild, nach dem der Fahrer des einzuparkenden Kraftfahrzeugs ein Stück weiter zurückgefahren ist. Nun schließt der fahrerseitige Quader 8 im Wesentlichen mit dem Heck des vorderen parkenden Fahrzeugs 5 ab. Weiterhin ist der zweite fahrerseitige Quader 9 über dem zweiten parkenden Fahrzeug 6 angeordnet, so dass die Parklücke 7 von den beiden eingeblendeten Quadern 8, 9 eingeschlossen wird. Die beiden beifahrerseitigen Quader 10, 11 sowie der Parkrahmen 12 haben sich ebenfalls synchron mit der Rückwärtsfahrt bewegt.

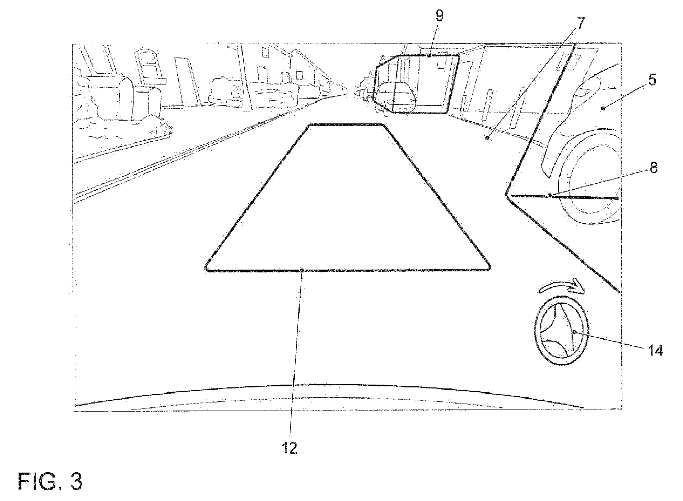

Fig. 3 zeigt den Zustand nach der Betätigung des Blinkers, wodurch dem System signalisiert wird, dass fahrerseitig eingeparkt werden soll. Da nun die Einparkseite bekannt ist, werden die beifahrerseitigen Quader 10, 11 ausgeblendet und ein zweites Lenksymbol 14 eingeblendet, welches den Fahrer mit einem einseitigen Pfeilsymbol anweist im stehenden Fahrzeugzustand den Lenkwinkel zu verändern bzw. einzustellen, um in die Parklücke 7 einlenken zu können.

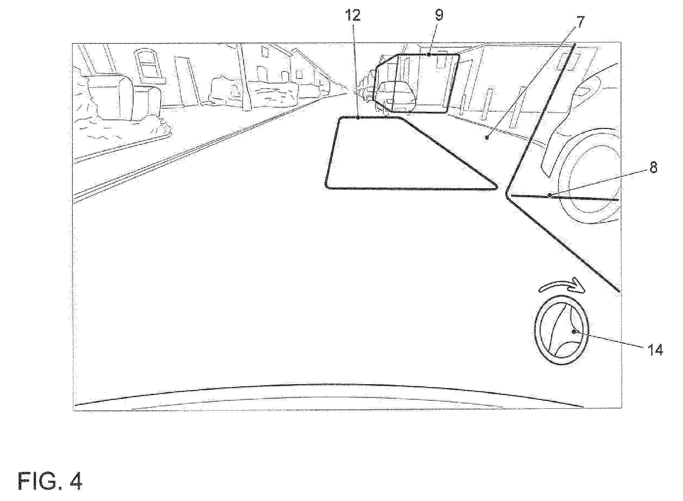

Fig. 4 veranschaulicht, dass die Betätigung des Lenkrades und der damit veränderte Lenkwinkel eine Verschiebung des Parkrahmens 12 in Richtung der Parklücke 7 bewirkt. Dargestellt ist folglich ein vom Fahrer aktuell eingestellter Lenkwinkel, der die Verbringung des einzuparkenden Fahrzeugs bei einer Rückwärtsfahrt aus der Einparkposition heraus in den in Fig. 4 dargestellten Parkrahmen bewirken würde. Es ist so für den Fahrer ersichtlich, dass der aktuelle Lenkwinkel die Längsparklücke nicht erreicht.

In Fig. 5 ist die Situation dargestellt, in welcher der durch den Fahrer eingestellte Lenkwinkel so beschaffen ist, dass der Parkrahmen 12 in der Längsparklücke 7 versetzt ist. Mit anderen Worten, der Parkrahmen 12 ist in dem Bereich zwischen den fahrerseitigen Quadern 8, 9 der Fig. 4 angeordnet bzw. eingepasst. Wenn dies der Fall ist, so ändert sich die Darstellungsfarbe des Parkrahmens 12, beispielsweise von Rot in Grün, wodurch dem Fahrer signalisiert wird, dass der gewählte Lenkwinkel für den Einparkvorgang zutreffend ist. Dieser Lenkwinkel wird als Soll-Lenkwinkel des ersten Fahrabschnitts bezeichnet. Ferner werden die nun nicht mehr benötigten fahrerseitigen Quader 8, 9 ausgeblendet, da nun eine zulässige Einparkposition aufgefunden ist. Da der Parkrahmen 12 in der Längsparklücke 7 angeordnet und aufgrund des Soll-Lenkwinkels erreichbar ist, wird dadurch neben der Einparkposition ein im Parkrahmen angeordneter Umlenkpunkt (nicht dargestellt) definiert, an dem der Lenkwinkel erneut verändert werden muss, um das Fahrzeug in die Längsparklücke 7 einzuparken und auszurichten. Dadurch verfügt das System über eine Schätzung für den ersten Fahrweg Einparkposition - Umlenkpunkt. Es wird ein neues Lenksymbol 15 ohne Pfeilsymbol eingeblendet, welches dem Fahrer signalisiert, dass er keine weitere Drehung am Lenkrad mehr ausführen soll. Schließlich wird dem Fahrer durch ein Fahrsymbol 16 angezeigt, dass er nun rückwärts fahren soll, um in die durch den Parkrahmen 12 definierte Parkposition zu gelangen.

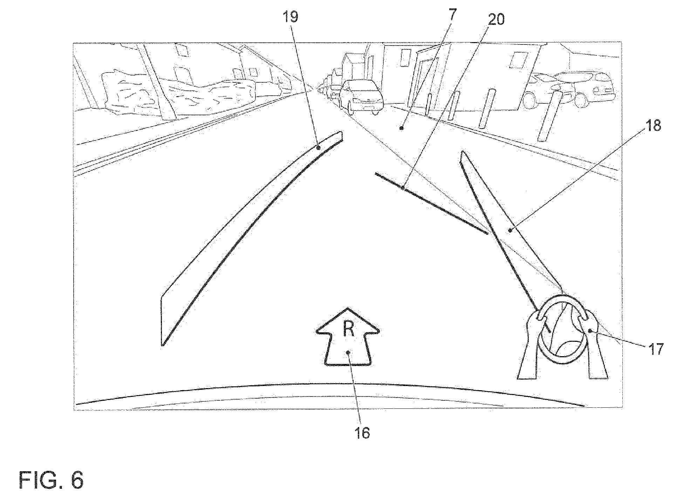

Fig. 6 zeigt einen Zwischenzustand beim ersten rückwärtigen Einparkabschnitt, der definiert ist durch Einparkposition und Umlenkposition in der Längsparklücke 7. Der Fahrer des einzuparkenden Fahrzeugs hat gemäß der Aufforderung durch das Fahrsymbol 16 das Fahrzeug in Bewegung gesetzt und wird durch ein weiteres Lenksymbol 17 dazu aufgefordert, den gewählten Lenkwinkel nicht zu verändern. Dies kann beispielsweise durch das gezeigte Lenksymbol 17 geschehen, wobei das durch zwei Hände festgehaltene Lenkrad dem Fahrer signalisieren soll, das Lenkrad in der jetzigen Stellung festzuhalten. Da das System die Einparkposition und die Endposition, d.h. die Umlenkposition, des ersten rückwärtigen Fahrabschnitts kennt, kann eine Schätzung des Fahrweges und des Fahrverlaufs vorgenommen werden. Aufgrund des tatsächlichen Fahrverlaufs wird ein Fahrschlauch bestimmt und in dem rückwärtigen Bild in Form von zwei zweiten 3D-Objekten, in diesem Fall von transparenten Leitplanken 18 und 19 in 3D-Form, dargestellt. Ferner wird noch eine Hilfslinie 20 eingeblendet, die zur späteren Ausrichtung in der Längsparklücke 7 dient. Nicht sichtbar ist ein Sollfahrweg, der durch eine Hilfslinie dann dargestellt wird, wenn der Fahrschlauch vom Sollweg abweicht.

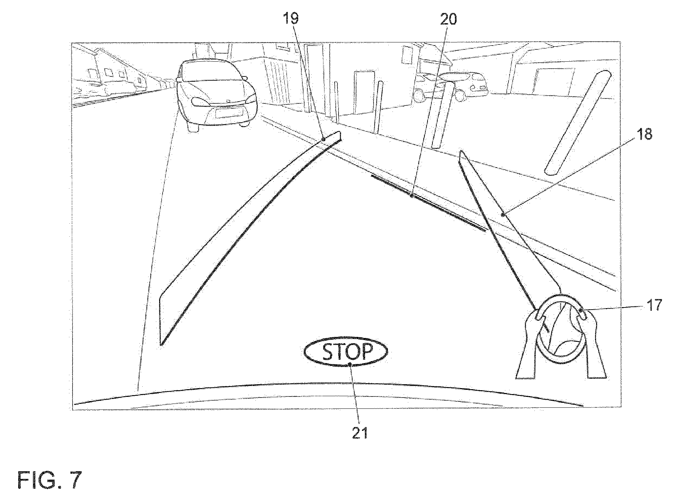

Fig. 7 zeigt das Erreichen des Umlenkpunktes. Da das System über eine Schätzung des Fahrwegs verfügt und damit den ungefähren Umlenkpunkt kennt, wird kurz vor dem Erreichen oder mit Erreichen des geschätzten Umlenkpunktes der Fahrer mit einem eingeblendeten Stoppsymbol 21 zum Anhalten des Fahrzeugs aufgefordert. Kurz vor Erreichen des geschätzten Umkehrpunktes bedeutet eine im System gespeicherte vorgegebene Distanz. Da die Systemschätzung jedoch ungenau und fehlerbehaftet ist, wird dem Fahrer zusätzlich eine Hilfslinie 20 eingeblendet, an die er den Bordstein oder die Parklückenlängsmarkierung ausrichten soll. Ist die Hilfslinie bei der Aufforderung zum Stoppen des Fahrzeugs noch nicht an der Parklückenbegrenzung ausgerichtet, so fährt der Fahrer trotz der Stoppaufforderung weiter bis die Ausrichtung der Hilfslinie 20 erfolgt ist und stoppt das Fahrzeug dann. Der Fahrer korrigiert also die Systemschätzung durch das exakte Ausrichten der zusätzlichen Hilfslinie. Das System kennt nun den Umlenkpunkt und verfügt über eine Schätzung der Endposition bezüglich des zweiten Fahrabschnitts.

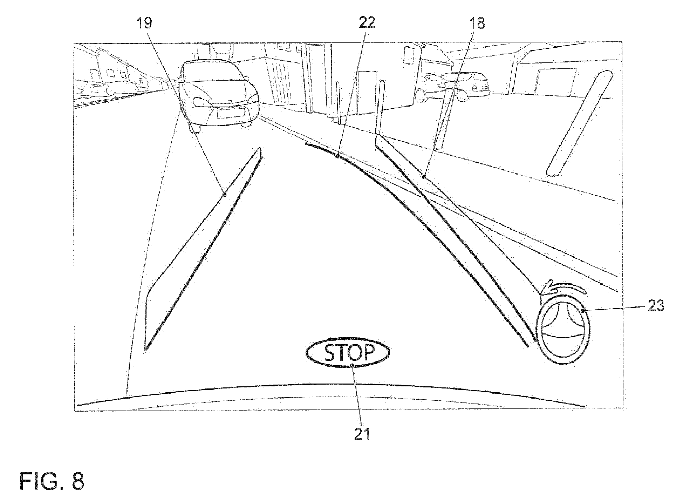

Fig. 8 zeigt die Wahl des neuen Lenkwinkels für den nächsten Fahrabschnitt nach dem Erreichen des Umlenkpunktes. Nachdem der Fahrer in Fig. 7 die Hilfslinie 20 an der Parklückenbegrenzung ausgerichtet hat, stoppt er das Fahrzeug, was für das System der Hinweis auf das Erreichen des Umlenkpunktes ist. Da der neue Lenkwinkel für den zweiten Fahrabschnitt noch nicht definiert ist, bleibt das Stoppsymbol 21 in der Anzeige dargestellt. Aufgrund der Ausrichtung der Hilfslinie 20 in Fig. 7 ist dem System die Parklückenbegrenzung bekannt und es wird eine weitere, den Sollfahrweg vorgebende Hilfslinie 22 eingeblendet, an die der Fahrer die fahrerseitige 3D-Leitplanke 18 mittels der Wahl eines neuen Soll-Lenkwinkels ausrichten muss. Dazu wird dem Fahrer eine Aufforderung zum Lenken durch ein eingeblendetes Lenksymbol 23 gegeben, welches durch den Richtungspfeil anzeigt, in welche Richtung das Lenkrad zu drehen ist. Durch die Drehung des Lenkrades in diese Richtung und die dadurch bedingte Änderung des eingestellten Lenkwinkels wird ein Verschieben der fahrerseitigen 3D-Leitplanke 18 zur Hilfslinie 22 hin bewirkt. Wird eine Übereinstimmung zwischen der Hilfslinie 22 und der fahrerseitigen 3D-Leitplanke 18 hergestellt, so ist der gesuchte neue Soll-Lenkwinkel bestimmt und es wird eine Schätzung berechnet, wie weit das Fahrzeug zurückzusetzen ist, bis es korrekt ausgerichtet ist.

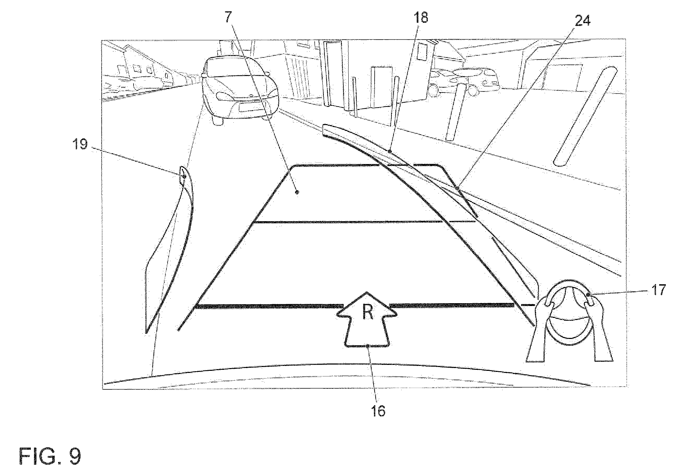

Fig. 9 zeigt das Einleiten des nächsten Fahrabschnitts. Da der zum weiteren Einparken in die Längsparklücke notwendige Soll-Lenkwinkel aufgefunden ist, wird der Fahrer durch Einblenden des Fahrsymbols 16 zur Weiterfahrt in rückwärtiger Richtung aufgefordert, wobei das Einblenden des Lenksymbols 17 den Fahrer zum Beibehalten des eingestellten Lenkwinkels auffordert. Dargestellt sind ferner der Fahrschlauch aufgrund des tatsächlichen Ist-Lenkwinkels durch Einblenden der transparenten 3D-Leitplanken 18, 19. Die Hilfslinie 22 des Sollfahrwegs des zweiten Fahrabschnitts ist nicht mehr sichtbar, da sie von der fahrerseitigen 3D-Leitplanke überdeckt ist. Um das Fahrzeug in der Längsparklücke 7 korrekt auszurichten, wird zusätzlich ein Abstandsraster 24 eingeblendet, welches eine Funktion des aktuellen Orts der Rückwärtsbewegung ist.

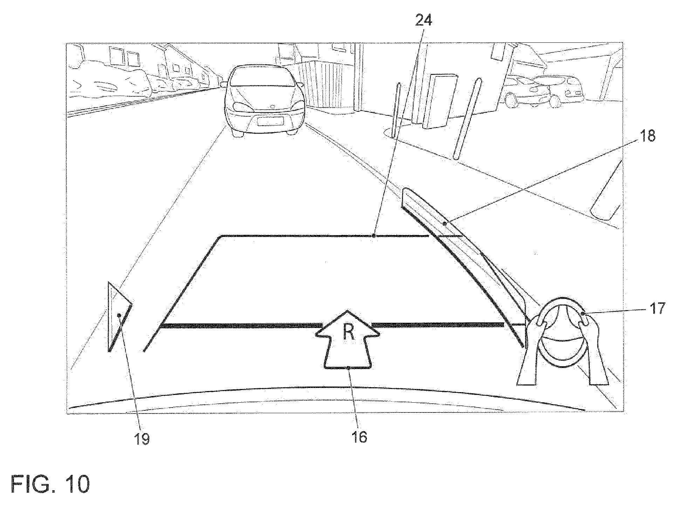

Fig. 10 zeigt die Situation kurz vor dem Erreichen der Endposition. Das Abstandsraster 24 ist bereits verkürzt, allerdings ist es noch nicht an der Parklückenbegrenzung ausgerichtet. Die fahrerseitige 3D-Leitplanke 18 zeigt noch in Richtung der Parklückenbegrenzung, so dass der geschätzte Endpunkt noch nicht erreicht ist. Ferner wird der Fahrer durch das Lenksymbol 17 aufgefordert, den Lenkwinkel beizubehalten.

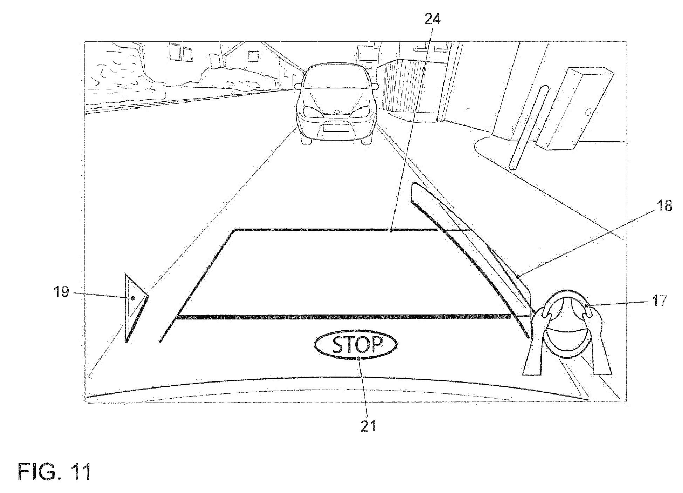

Fig. 11 zeigt das Erreichen der geschätzten Endposition, in der der Fahrer durch das Stoppsymbol zum Anhalten des Fahrzeugs aufgefordert wird. Das verkürzte Abstandsraster 24 ist im Wesentlichen an der Parklückengrenze, d.h. dem Bordstein, ausgerichtet. Im Wesentlichen ausgerichtet bedeutet, dass der Bordstein und das Raster sich innerhalb eines vorbestimmten Winkelbereichs befinden, beispielsweise 10°. Da die Endposition erreicht ist, kann der Einparkvorgang als beendet betrachtet werden, allerdings stehen die lenkbaren Vorderräder nicht gerade, was an dem Verlauf der 3D-Leitplanken erkennbar ist, die aus der Parklücke heraus laufen.

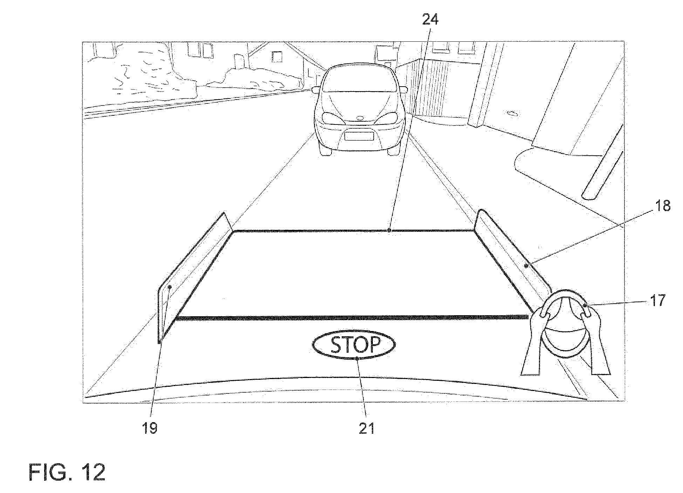

Fig. 12 zeigt das Ausrichten der Räder. Durch Drehen des Lenkrades werden die 3D-Leitplanken mit dem Abstandsraster in Deckung gebracht, was bedeutet, dass nun das Fahrzeug in der Parklücke ausgerichtet ist. Da dies für das unterstützende Einparksystem keine weiteren Folgen hat, bleiben das Stoppsymbol 21 und das Lenksymbol 17 in dieser Ausführungsform unverändert eingeblendet.

Zusammenfassend wird ein bilddarstellendes System mit der Möglichkeit der Überlagerung von Hilfsgrafiken jedoch ohne bildauswertende Verfahren realisiert, das den Einparkvorgang in Längsparklücken schrittweise unterstützt. Unterschieden werden dabei unterschiedliche Einparkschritte, nämlich:
- Anfahren der Parklücke,
- Einschlagen des Lenkrad auf erforderlichen Lenkwinkel,
- Rückwärtsfahren bis zum Umlenkpunkt und dann stoppen,
- Einschlagen des Lenkrads auf den erforderlichen Lenkwinkel nach dem Umlenkpunkt, und
- Rückwärtsfahren bis zur Endposition zur Ausrichtung des Fahrzeugs.

Das Gerät ist kostengünstig, da keine Informationen aus dem Bildinhalt gewonnen werden. Es wird also keinerlei Erkennung betrieben, die hohe Rechenleistung erfordert.

Der Fahrer wird mit Unterstützung durch Hilfsgrafiken aufgefordert, den Ausgangszustand für den ersten Einparkschritt herzustellen, d.h. Positionierung des Fahrzeugs durch die 3D-Quader und Lenkeinschlag bis die Parklücke am Zielort im Bild liegt.

Aus dem dann erreichten Fahrzeugzustand kann ermittelt werden, wie weit das Fahrzeug zurückgesetzt werden muss, um an den Umlenkpunkt zu gelangen. Das System kennt also eine Schätzung des ersten Fahrwegs. Basierend auf der Schätzung wird der Fahrer zum Los- und Weiterfahren aufgefordert. Kurz vor dem Erreichen der Umlenkposition wird ein "Stop" Symbol eingeblendet. Da die Systemschätzung jedoch ungenau und fehlerbehaftet ist wird dem Fahrer zusätzlich eine Linie eingeblendet, an die er den Bordstein oder die Parklückenlängsmarkierung ausrichten soll. Der Fahrer korrigiert also die Systemschätzung durch das exakte Ausrichten der zusätzlichen Hilfslinie.

Nach dem Umlenken kann das System wieder eine Schätzung berechnen, wie weit das Fahrzeug bis zu einer Endposition zurückzusetzen ist, bis es korrekt ausgerichtet ist. Es unterstützt den Fahrer also wieder mit der Fahraufforderung und einer Stoppschätzung. Durch den Bildinhalt sowie weitere Hilfslinien kann und soll der Fahrer wieder den Schätzfehler durch Ausrichten des Bildinhalts an den Hilfslinien korrigieren.

Es wird ohne Bilderkennungsverfahren ein System geschaffen, dass der Ort zur Beendigung der nächsten Fahrbewegung aus dem Anfangszustand der Fahrbewegung schätzt und an den Fahrer zurückmeldet. Zudem kann der Schätzfehler korrigiert werden, indem der Bildinhalt an jeweils geeigneten Hilfslinien ausgerichtet wird. Das Ende der Fahrbewegung kann durch ein Stoppsymbol angezeigt werden. Das Einblenden der Hilfslinien zur Ausrichtung kann gezielt am geschätzten Ende der Fahrbewegung erfolgen. Die Interpretation der Hilfslinien zur Ausrichtung des Fahrzeugs z.B. an einem Bordstein ist dann sehr intuitiv, da die Bordsteinhilfslinie bereits in der Nähe des Bordsteins als Bildinhalt liegt.

## Patentansprüche

1. Verfahren zum Unterstützen eines rückwärtigen Einparkvorgangs eines mit einem Rückfahrkamerasystem ausgestatteten Kraftfahrzeugs in eine Längsparklücke (7), wobei das Bild des rückwärtigen Umfeldes des Kraftfahrzeugs auf einer Anzeigeeinrichtung (1) des Kraftfahrzeugs dargestellt wird, wobei zur Ermittlung der Einparkposition beiderseits des Fahrzeugs jeweils zwei erste Symbole in das Bild des Rückfahrkamerasystems eingeblendet werden,
**dadurch gekennzeichnet, dass**
die Symbole durch 3D-Symbole (8, 9, 10, 11), insbesondere 3D-Quader, gebildet werden,
der Abstand zwischen zwei ersten 3D-Symbolen einer Seite einer Mindestparklücke für das Kraftfahrzeug entspricht, und
nach dem Ermitteln der Ausgangsposition im Stand des Kraftfahrzeugs ein im rückwärtigen Bild eingeblendeter dargestellter Parkrahmen (12) mittels Ausrichten des Einlenkwinkels verschoben wird, bis der Parkrahmen (12) in der Längsparklücke (7) ausgerichtet ist, wodurch im Parkrahmen (12) ein Umlenkpunkt definiert wird.

2. Verfahren nach Anspruch 1, **dadurch gekennzeichnet, dass** durch Wahl einer Seite für den Einparkvorgang die ersten 3D-Symbole der anderen Fahrzeugseite ausgeblendet werden.

3. Verfahren nach Anspruch 2, **dadurch gekennzeichnet, dass** das Kraftfahrzeug zur Ermittlung der Ausgangsposition solange versetzt wird bis die Lücke zwischen den ersten 3D-Symbolen (8, 9, 10, 11) der Längsparklücke (7) entspricht.

4. Verfahren nach einem der vorangegangenen Ansprüche, **dadurch gekennzeichnet, dass** nach dem Ausrichten des Parkrahmens (12) in der Längsparklücke (7) eine rückwärtige Fahrt mit dem ausgewählten Einlenkwinkel vom der Ausgangsposition zu dem im Parkrahmen angeordneten Umlenkpunkt hin durchgeführt wird, wobei der tatsächliche Fahrschlauch mittels zweier eingeblendeter zweiter 3D-Symbole (18, 19), insbesondere 3D-Leitplanken, im rückwärtigen Bild dargestellt wird.

5. Verfahren nach Anspruch 4, **dadurch gekennzeichnet, dass** der durch den gewählten Soll-Einlenkwinkel definierte Sollfahrweg durch eine Hilfslinie (22) im rückwärtigen Bild darstellbar ist.

6. Verfahren nach Anspruch 4 oder 5, **dadurch gekennzeichnet, dass** das Fahrzeug innerhalb einer vorgegebenen Umgebung des Umlenkpunktes zum Stoppen aufgefordert wird und zur Ermittlung einer Endposition eine Hilfslinie (20) mit einer Längsparklückenbegrenzung in Überdeckung gebracht werden soll.

7. Verfahren nach Anspruch 6, **dadurch gekennzeichnet, dass** im rückwärtigen Bild eine den Endpunkt der folgenden Fahrzeugbewegung definierende Hilfslinie (22) eingeblendet wird, wobei durch Wahl eines neuen Lenkwinkels der durch die eingeblendeten zweiten 3D-Symbole (18, 19) dargestellte Fahrschlauch mit der Hilfslinie in Übereinstimmung zu bringen ist.

8. Verfahren nach einem der Ansprüche 4 bis 7, **dadurch gekennzeichnet, dass** zur Unterstützung des Fahrers weitere Hilfslinien (24) in das rückwärtige Bild eingeblendet werden.

9. Vorrichtung zur Durchführung des Verfahrens nach einem der Ansprüche 1 bis 9 zum Einparken eines Kraftfahrzeugs in eine Längsparklücke (7), mit einem Rückfahrkamerasystem und einer Anzeige(1) zur Darstellung des von dem Rückfahrkamerasystem aufgenommenen Bildes des rückwärtigen Umfelds des Kraftfahrzeugs, wobei die Vorrichtung eine Einrichtung zur Erzeugung und Einblendung von ersten Symbolen in das auf der Anzeige (1) dargestellte rückwärtige Bild der Kraftfahrzeugumgebung zur Ermittlung der Einparkposition aufweist, wobei auf jeder Fahrzeugseite zwei erste Symbole dargestellt sind
**dadurch gekennzeichnet, dass**
die ersten Symbole durch 3D-Symbole (8, 9, 10, 11), insbesondere 3D-Quader, gebildet werden,
,der Abstand der ersten 3D- Symbole der Mindestparklücke für das Kraftfahrzeug entspricht, und
eine Einrichtung zur Erzeugung und Einblendung eines Parkrahmens (12) in das rückwärtige Umfeldbild aufweist, wobei in der aufgefundenen Einparkposition des Kraftfahrzeugs der Parkrahmen (12) als Funktion des Lenkwinkels in die aufgefundene Längsparklücke (7) verschoben wird, wodurch im verschobenen Parkrahmen (12) ein Umlenkpunkt definiert wird

10. Vorrichtung nach Anspruch 9, **dadurch gekennzeichnet, dass** die Vorrichtung eine Einrichtung zur Erzeugung und Einblendung zweiter 3D-Symbole (18, 19) in das Bild des rückwärtigen Kraftfahrzeugumfeldes aufweist, wobei die zweiten 3D-Symbole (18, 19) den Fahrschlauch des Kraftfahrzeugs während des Einparkvorgangs darstellen.

11. Vorrichtung nach Anspruch 10, **dadurch gekennzeichnet, dass** die Vorrichtung eine Einrichtung zur Erzeugung und Einblendung weiterer Hilfslinien (20, 22, 24) zur Unterstützung des Fahrers während des Einparkvorgangs in das Bild des rückwärtigen Kraftfahrzeugumfeldes aufweist.

12. Vorrichtung nach einem der Ansprüche 9 bis 11, **dadurch gekennzeichnet, dass** die Vorrichtung eine Schätzeinheit zur Schätzung des voraussichtlich zurückzulegenden Fahrwegs aufweist.

## Claims

1. Method for assisting a reverse parking process of a motor vehicle equipped with a rear-view camera system into a longitudinal parking space (7), wherein the image of the surroundings to the rear of the motor vehicle is displayed on a display device (1) of the motor vehicle, wherein, in order to determine the parking position on both sides of the vehicle, two first symbols are respectively blended into the image of the rear-view camera system, **characterized in that** the symbols are formed by 3D symbols (8, 9, 10, 11), in particular 3D cuboids, the distance between two first 3D symbols corresponds to one side of a minimum parking space for the motor vehicle, and after the determination of the initial position in the stationary state of the motor vehicle a displayed parking frame (12) which is blended into the image of the area to the rear of the vehicle is displaced by orienting the inward steering angle until the parking frame (12) is oriented in the longitudinal parking space (7), as a result of which a deflection point is defined in the parking frame (12).

2. Method according to Claim 1, **characterized in that** selecting one side for the parking process causes the first 3D symbols of the other side of the vehicle to be faded out.

3. Method according to Claim 2, **characterized in that** in order to determine the initial position the motor vehicle is moved until the gap between the first 3D symbols (8, 9, 10, 11) corresponds to the longitudinal parking space (7).

4. Method according to one of the preceding claims, **characterized in that** after the orientation of the parking frame (12) in the longitudinal parking space (7) rearward travel is carried out with the selected inward steering angle from the initial position to the deflection point arranged in the parking frame, wherein the actual driving tube is displayed in the image of the area to the rear of the vehicle by means of two blended-in second 3D symbols (18, 19), in particular 3D guide rails.

5. Method according to Claim 4, **characterized in that** the setpoint driving path which is defined by the selected setpoint inward steering angle can be displayed in the image of the area to the rear of the vehicle by an auxiliary line (22).

6. Method according to Claim 4 or 5, **characterized in that** the vehicle is requested to stop within a predefined area surrounding the deflection point, and an auxiliary line (20) is made to be congruent with a longitudinal parking space boundary in order to determine an end position.

7. Method according to Claim 6, **characterized in that** in the image of the area to the rear of the vehicle an auxiliary line (22) which defines the end point of the following vehicle movement is blended in, wherein the driving tube which is displayed by the blended-in second 3D symbols (18, 19) is made to correspond to the auxiliary line by selecting a new steering angle.

8. Method according to one of Claims 4 to 7, **characterized in that** in order to assist the driver further auxiliary lines (24) are blended into the image of the area to the rear of the vehicle.

9. Device for carrying out the method according to one of Claims 1 to 8 for parking a motor vehicle in a longitudinal parking space (7), having a rear-view camera system and a display (1) for displaying the image of the surroundings to the rear of the motor vehicle taken by the rear-view camera system, wherein the device has an apparatus for generating and blending first symbols into the image of the surroundings to the rear of the motor vehicle displayed on the display (1) in order to determine the parking position, wherein on each side of the vehicle two first symbols are displayed, **characterized in that** the first symbols are formed by 3D symbols (8, 9, 10, 11), in particular 3D cuboids, the distance between the first 3D symbols corresponds to the minimum parking space for the motor vehicle, and has an apparatus for generating and blending a parking frame (12) into the image of the surroundings to the rear, wherein, in the identified parking position of the motor vehicle, the parking frame (12) is displaced into the identified longitudinal parking space (7) as a function of the steering angle, as a result of which a deflection point is defined in the displaced parking frame (12).

10. Device according to Claim 9, **characterized in that** the device has an apparatus for generating and blending second 3D symbols (18, 19) into the image of the surroundings to the rear of the motor vehicle, wherein the second 3D symbols (18, 19) display the driving tube of the motor vehicle during the parking process.

11. Device according to Claim 10, **characterized in that** the device has an apparatus for generating and blending further auxiliary lines (20, 22, 24) into the image of the surroundings to the rear of the motor vehicle in order to assist the driver during the parking process.

12. Device according to one of Claims 9 to 11, **characterized in that** the device has an estimating unit for estimating the driving path expected to be travelled along.

## Revendications

1. Procédé d'assistance à une manoeuvre de stationnement en marche arrière d'un véhicule à moteur équipé d'un système de caméra de recul dans un emplacement de stationnement longitudinal (7), dans lequel l'image de l'environnement arrière du véhicule à moteur est représentée sur un dispositif d'affichage (1) du véhicule à moteur, dans lequel, pour déterminer la position de stationnement, deux premiers symboles sont respectivement incrustés dans l'image du système de caméra de recul des deux côté du véhicule, **caractérisé en ce que**
les symboles sont formés par des symboles en 3D (8, 9, 10, 11), notamment des parallélépipèdes en 3D,
l'écart entre deux premiers symboles en 3D correspond à un côté d'un emplacement de stationnement minimal pour le véhicule à moteur, et
après obtention de la position de sortie au niveau du véhicule à moteur, un cadre de stationnement (12) représenté de façon incrustée dans une image arrière est décalé en effectuant un braquage de l'angle de braquage jusqu'à ce que le cadre de stationnement (12) soit dirigé vers l'emplacement de stationnement (7), lors de quoi un point de braquage est défini dans le cadre de stationnement (12).

2. Procédé selon la revendication 1, **caractérisé en ce que** les premiers symboles en 3D de l'autre côté du véhicule sont occultés par sélection d'un côté pour la manoeuvré de stationnement.

3. Procédé selon la revendication 2, **caractérisé en ce que** le véhicule à moteur est déplacé pour déterminer la position de sortie jusqu'à ce que l'espacement compris entre les premiers symboles en 3D (8, 9, 10, 11) corresponde à l'emplacement de stationnement longitudinal (7).

4. Procédé selon l'une quelconque des revendications précédentes, **caractérisé en ce qu'**après avoir dirigé le cadre de stationnement (12) vers l'emplacement de stationnement longitudinal (7), une conduite en marche arrière avec l'angle de braquage sélectionné de la position de sortie vers le point de braquage disposé dans le cadre de stationnement est effectuée, dans lequel le couloir de conduite réel est représenté dans l'image arrière au moyen de deux seconds symboles en 3D incrustés (18, 19), notamment de glissières de sécurité en 3D.

5. Procédé selon la revendication 4, **caractérisé en ce que** le trajet de conduite nominal défini par l'angle de braquage nominal sélectionné peut être représenté dans l'image arrière au moyen d'une ligne de repère (22).

6. Procédé selon la revendication 4 ou 5, **caractérisé en ce que** le véhicule est amené à s'arrêter à l'intérieur d'un environnement prédéterminé du point de braquage et **en ce que**, pour déterminer une position finale, une ligne de repère (20) doit être amenée à être superposée à une limite d'emplacement de stationnement longitudinal.

7. Procédé selon la revendication 6, **caractérisé en ce qu'**un point d'extrémité de la ligne de repère (22) définissant le déplacement suivant du véhicule est incrusté dans l'image arrière, dans lequel le couloir de conduite représenté par les seconds symboles en 3D incrustés (18, 19) doit être amené à concorder avec la ligne de repère par sélection d'un nouvel angle de braquage.

8. Procédé selon l'une quelconque des revendications 4 à 7, **caractérisé en ce que**, pour assister le conducteur, d'autres lignes de repère (24) sont incrustées dans l'image arrière.

9. Dispositif destiné à mettre en oeuvre le procédé selon l'une quelconque des revendications 1 à 8 pour stationner un véhicule à moteur dans une place de stationnement longitudinale (7), comportant un système de caméra de recul et un dispositif d'affichage (1) destiné à représenter l'image de l'environnement arrière du véhicule à moteur acquise par le système de caméra de recul, dans lequel le dispositif comprend un moyen destiné à générer et à incruster des premiers symboles dans l'image arrière de l'environnement du véhicule à moteur, représentée sur le dispositif d'affichage (1), pour déterminer une position de stationnement, dans lequel deux premiers symboles sont représentés de chaque côté du véhicule,
**caractérisé en ce que** les premiers symboles sont formés par des symboles en 3D (8, 9, 10, 11), notamment par des parallélépipèdes en 3D,
l'écartement entre les premiers symboles en 3D correspond à l'emplacement de stationnement minimal pour le véhicule à moteur, et
un moyen destiné à générer et à incruster un cadre de stationnement (12) dans l'image de l'environnement arrière, dans lequel le cadre de stationnement (12) est décalé en fonction de l'angle de l'angle de braquage dans l'emplacement de stationnement longitudinal (7) repéré à la position de stationnement repérée du véhicule à moteur, d'où il résulte qu'un point de braquage est défini dans le cadre de stationnement décalé (12).

10. Dispositif selon la revendication 9, **caractérisé en ce que** le dispositif comprend un moyen destiné à générer et à incruster des seconds symboles en 3D (18, 19) dans l'image de l'environnement arrière du véhicule à moteur, dans lequel les seconds symboles en 3D (18, 19) représentent le couloir de conduite du véhicule à moteur pendant la manoeuvré de stationnement.

11. Dispositif selon la revendication 10, **caractérisé en ce que** le dispositif comprend un moyen destiné à générer et à incruster d'autres lignes de repère (20, 22, 24) destinées à assister le conducteur pendant la manoeuvré de stationnement dans l'image de l'environnement arrière du véhicule à moteur.

12. Dispositif selon l'une quelconque des revendications 9 à 11, **caractérisé en ce que** le dispositif comprend une unité d'estimation destinée à estimer la trajectoire de conduite prévisible devant être parcourue.
